# EUROPÄISCHE PATENTSCHRIFT

(11) **EP 2 585 780 B1**
(45) Veröffentlichungstag und Bekanntmachung des Hinweises auf die Patenterteilung: **30.03.2016**
(21) Anmeldenummer: 11736022.2
(22) Anmeldetag: 22.06.2011
(51) Int. Cl.: B01D 3/14, B01D 3/38, B01D 9/00, C01C 1/08, F26B 25/00, B01D 53/14

(54) **VERFAHREN ZUR RÜCKGEWINNUNG FLÜCHTIGER BESTANDTEILE AUS EINEM FESTSTOFF**
METHOD FOR RECOVERING VOLATILE COMPONENTS FROM A SOLID
PROCÉDÉ DE RÉCUPÉRATION DE COMPOSANTS VOLATILS ÉMANANT D'UN SOLIDE

(30) Priorität: 22.06.2010 DE 102010025206
(43) Veröffentlichungstag der Anmeldung: 01.05.2013
(73) Patentinhaber: Fraunhofer-Gesellschaft zur Förderung der angewandten Forschung e.V., 80686 München (DE); Universität Stuttgart, 70174 Stuttgart (DE)
(72) Erfinder: CAMPOS, Alejandra, 70569 Stuttgart (DE); EGNER, Siegfried, 74740 Adelsheim (DE); LOHNER, Alexander, 70563 Stuttgart (DE); LAOPEAMTHONG, Sukhanes, 70190 Stuttgart (DE); STOLL, Maria, Soledad, 97828 Marktheidenfeld (DE)
(74) Vertreter: DREISS Patentanwälte PartG mbB
(86) Internationale Anmeldenummer: PCT/EP2011/060493
(87) Internationale Veröffentlichungsnummer: WO 2011/161184

(56) Entgegenhaltungen:
- WO-A1-93/15816
- WO-A1-2009/018997
- WO-A2-2008/052792
- DE-A1- 1 729 224
- DE-A1- 4 326 468
- DE-A1-102007 037 605
- FR-A1- 2 666 330
- US-A- 5 194 122

## Beschreibung

Die Erfindung betrifft ein Verfahren zur Rückgewinnung flüchtiger Bestandteile aus einem Feststoff.

Bei konventionellen Trocknungsprozessen, beispielsweise Konvektionstrocknung von feuchter Biomasse, mit Warm- oder Heißluft, gehen wertvolle flüchtige Bestandteile wie zum Beispiel Aromastoffe durch die Abluft verloren.

Bei der Lagerung von festen oder flüssigen organischen Reststoffen wie beispielsweise Gülle oder Mist geht Ammoniak durch Verflüchtigung verloren. Dies ist aus mehreren Gründen unerwünscht. Erstens stellt Ammoniak einen wertvollen Rohstoff dar, dessen synthetische Herstellung sehr energieaufwendig ist. Zweitens ist Ammoniak ein Luftschadstoff und wirkt bei höheren Konzentrationen gesundheitsschädlich.

Ähnliche Problemstellungen ergeben sich bei Gärresten, welche als flüssige oder feste Rückstände bei der Vergärung von Biomasse zur Biogasgewinnung zurückbleiben. Ammonium wird während der Vergärung nicht abgebaut. Ein großer Teil des Stickstoffs aus dem Substrat verbleibt im Gärrest. Durch die Abbauprozesse verschiebt sich der Anteil des organisch gelösten Stickstoffs zu Ammonium, so dass sich während des anaeroben Abbaus der Anteil des Ammoniums sogar noch erhöht. Ammoniumstickstoff liegt in wässrigen Lösungen, abhängig von pH-Wert und Temperatur als Ammoniumium oder als Ammoniak vor. Bei der Lagerung und Ausbringung der Gärreste besteht daher eine erhöhte Gefahr von Ammoniakausgasung. Bei der Trocknung von Gärresten mit konventionellen Trocknungsverfahren entstehen ebenfalls Ammoniakemissionen.

Aus der WO2009/018997 A1 ist ein Verfahren zur Separation von flüchtigen Substanzen, insbesondere von Aromastoffen, bekannt. Dabei wird der überschüssige Dampf in einen einstufigen Kondensator geführt und dort verflüssigt. Die sich ergebende Flüssigkeit wird dann in eine Extraktionsvorrichtung weitergeleitet, um die volatilen Stoffe von dem kondensierten Wasser abzutrennen. Durch die Zentrifugal- und Schwerkräfte gehen die leichten und volatilen Stoffe in die Gasphase über und sammeln sich im oberen Teil der Vorrichtung. Mit Hilfe eines Inertgases, zum Beispiel Dampf (Sattdampf), werden sie mitgerissen und zu einem Kondensator abgeleitet. Dort werden sie dann gekühlt und aufkonzentriert. Andererseits bewegt sich das Wasser dadurch nach unten und wird dort abgeschieden.

Der thermische Wasserentzug aus dem Feststoff erfolgt durch die Trocknung mit überhitztem Wasserdampf in Kreislauffahrweise bei Atmosphärendruck. Während der Trocknung wird der Feuchtegehalt des Feststoffes in die Gasphase überführt. Diese aus dem Feststoff aufgenommene Feuchte wird zu überschüssigem Dampf, welcher aus dem Trocknungsraum aufgrund der Volumenvergrößerung des Gases in geschlossenem Kreislauf abgeleitet werden soll.

Aus den Druckschriften DE 26 15 195 A1 und EP 1 318 105 A1 sind verschiedene Vorrichtungen und Verfahren bekannt, bei denen Abwässer mit erhitzter Luft oder überhitztem Wasserdampf behandelt werden, um in den Abwässern vorhandene Stoffe auszudestillieren und/oder wiederzugewinnen.

In der DE 43 26 468 A1 wird die Rückgewinnung ausgetragener wasserdampfflüchtiger Komponenten nach der Kondensation der Dampfphase eines abgezogenen Brüdenteilstroms zur wässrigen Flüssigphase beschrieben. Die Trennung der durch nachfolgende Kondensation zur Flüssigphase verdichteten Stoffmischungen aus Wasser und den ausgetragenen wasserdampfflüchtigen Komponenten erfolgt mittels Membrantrennverfahren.

Aus der WO 93/15816 A1 ist ein Verfahren zur Brüdenentsorgung bei der Heißdampftrocknung mit allen Merkmalen des Oberbegriffs des Anspruchs 1 bekannt. Dieses Verfahren setzt eine wasserhaltige Zubereitung von Wertstoffen voraus, die dann mit Heißdampf getrocknet wird. Dazu wird sehr viel Heißdampf benötigt.

Der Erfindung liegt die Aufgabe zugrunde ein verbessertes Verfahren zur Rückgewinnung flüchtiger Bestandteile aus einem Feststoff bereitzustellen, das weniger Energie benötigt.

Das erfindungsgemäße Verfahren hat den Vorteil, dass ein großer Teil des Wassers vorab durch ein mechanisches Verfahren abgetrennt wird. Freies Oberflächenwasser kann von Feststoffen durch sehr einfache mechanische Verfahren, wie beispielsweise Sedimentation, Filtration, oder Dekantieren abgetrennt werden. Der Energieaufwand ist dabei deutlich geringer als die thermische Abtrennung durch Verdampfen. Je mehr Feuchtigkeit dem Feststoff vor der thermischen Trocknung mit überhitztem Wasserdampf entzogen werden kann, desto geringer wird der Energiebedarf dafür. Eine mechanische Vorentwässerung reduziert die Kosten der Trocknung mit überhitztem Dampf.

Für die Abtrennung der flüchtigen Stoffe durch Kristallisation geeignete Ionen sind hierbei vor allem solche, die mit den flüchtigen Bestandteilen in einer chemischen Reaktion ein schwerlösliches Salz bilden. Zum Beispiel Ammoniak, welches mit konzentrierter Schwefelsäure zu Ammoniumsulfat reagiert. Das so gewonnene Salz kann als Düngemittel für Stickstoffarme Böden verwendet werden.

Denkbar ist aber auch eine Zugabe von Ionen, die ein Phasengleichgewicht so verschieben, dass der in der Flüssigphase gelöste Bestandteil durch Kristallisation als Feststoff ausfällt. Dieser Feststoff kann anschließend durch ein einfaches mechanisches (Trenn-)Verfahren abgetrennt werden.

Vorteilhafter Weise wird vorgeschlagen, dass das erfindungsgemäße Verfahren zur Rückgewinnung von Ammoniak aus organischen Feststoffen angewendet wird. Der getrocknete Feststoff kann in vorteilhafter Weise als Quelle verschiedener Nährstoffe wie beispielsweise Phosphor, Kalium, Calcium und aufgrund des Anteils an organischer Substanz als Bodenverbesserer eingesetzt werden. Durch den Entzug von Wasser und der damit einhergehenden Volumenreduzierung wird die Menge an zu lagernden und zu transportierenden organischen Reststoffen deutlich reduziert. Dadurch werden Lager- und Transportkosten eingespart. Desweiteren können bei einer Trocknung mit Prozesstemperaturen von über 100 °C Krankheitserreger in organischen Reststoffen abgetötet werden.

Durch das erfindungsgemäße Verfahren wird in vorteilhafter Weise Ammoniak aus organischen Feststoffen abgetrennt. Dadurch werden die Emissionen von Ammoniak und damit eine Geruchsbelästigung, während der Lagerung oder Ausbringung auf den Boden, von Gülle, Mist, Gärresten und Klärschlamm signifikant verringert.

Das erfindungsgemäße Verfahren arbeitet noch besser, wenn die Feststoffe organischen Ursprungs einer biologischen, vorzugsweise anaeroben Vorbehandlung unterzogen werden. Bei anaeroben Abbauprozessen, wie beispielsweise Faulung oder Gärung, verbleibt der größte Teil des Stickstoffs aus dem Substrat im Gärrest. Durch die Abbauprozesse verschiebt sich der Anteil des organisch gelösten Stickstoffs zu Ammonium. Durch das erfindungsgemäße Verfahren wird der Ammoniak aus dem Feststoff abgetrennt, so dass dieser ein phosphatreiches Düngemittel darstellt.

Die gezielte Rückgewinnung des Ammoniaks durch das erfindungsgemäße Verfahren ermöglicht die getrennte Gewinnung eines stickstoffreichen, mineralischen Düngers. Damit kann bei Düngemitteln ein geeignetes Stickstoff/Phosphat-Verhältnis eingestellt werden, das in vorteilhafter Weise an den Bedarf der Pflanzen und an die Bodenbeschaffenheit angepasst ist und damit eine Überdüngung vermeidet.

Weitere Vorteile und vorteilhafte Ausgestaltungen sind den nachfolgenden Zeichnungen, deren Beschreibung und den Patentansprüchen entnehmbar. Alle in den Zeichnungen, deren Beschreibung und den Patentansprüchen offenbarten Merkmale können sowohl einzeln als auch in beliebiger Kombination miteinander erfindungswesentlich sein.

Die Zeichnungen zeigen in schematischer Darstellung:
- Figur 1: die erfindungsgemäße Kombination aus Trocknung mit überhitztem Dampf und Abtrennung der im Dampf enthaltenen flüchtigen Stoffe
- Figur 2: ein der Trocknung vorgeschalteter Prozess zu einer Abtrennung einer flüssigen Phase
- Figur 3: ein der Trocknung vorgeschalteter biologischer Abbauprozess
- Figur 4: eine erste, nicht zur Erfindung gehörende Variante zur Abtrennung der im Dampf enthaltenen flüchtigen Stoffe
- Figur 5: eine zweite, nicht zur Erfindung gehörende Variante zur Abtrennung der im Dampf enthaltenen flüchtigen Stoffe
- Figur 6: die erfindungsgemäße Abtrennung der im Dampf enthaltenen flüchtigen Stoffe.

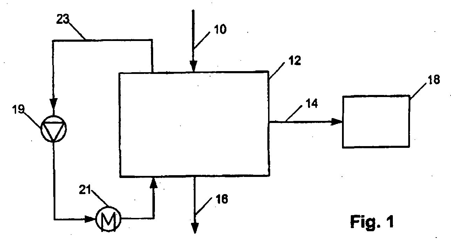

Figur 1 zeigt die Kombination aus Trocknung und anschließender Abtrennung der flüchtigen Bestandteile. Feste Stoffe 10 werden einer Trocknung mit überhitztem Wasserdampf 12 zugeführt. Das Trockengut wird dabei einer Atmosphäre aus Wasserdampf mit einer Temperatur oberhalb der Siedetemperatur (überhitzter Wasserdampf) ausgesetzt, erhitzt sich und gibt seine Feuchtigkeit in Form von Wasserdampf an die Atmosphäre aus überhitztem Wasserdampf ab.

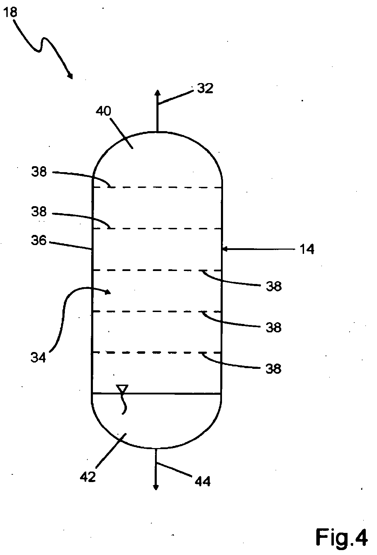

Der überhitzte Wasserdampf, Temperatur von über 120°C bei Atmosphärendruck, nimmt die Feuchtigkeit auf und kühlt sich dabei durch die Abgabe von Verdampfungswärme ab. Diese Wärme wird dem Wasserdampf durch eine Heizung wieder zugeführt, wodurch eine Solltemperatur gehalten wird und eine weitere Wasseraufnahme möglich ist. Zusammen mit der Feuchtigkeit gehen auch flüchtige Bestandteile der festen Stoffe in die Gasphase über. Zurück bleibt der getrocknete Feststoff 16. In einem weiteren Verfahrensschritt 18 werden die flüchtigen Bestandteile aus der Gasphase 14 abgetrennt. Mögliche Prozesse, die der Verfahrensschritt 18 beinhaltet, werden anhand der Figuren 4 - 6 näher erläutert.

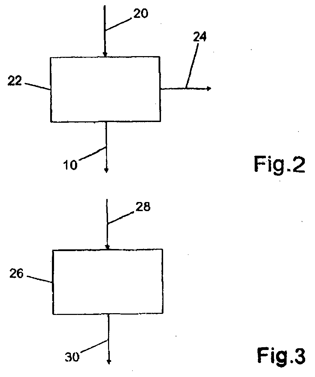

In Figur 2 dargestellt ist eine Vorbehandlung für ein Gemisch 20 aus flüssigen und festen Stoffen. Vor der Trocknung mit überhitztem Dampf 12 wird freie Flüssigkeit mittels eines geeigneten mechanischen Verfahrens zur Fest-/Flüssigtrennung 22 von den festen Stoffen 10, die anschließend getrocknet werden sollen, entfernt. Geeignete mechanisch Verfahren sind beispielsweise Filtration, Sedimentation, Dekantieren etc. Die dabei abgetrennte flüssige Phase 24 wird einer, in den Figuren nicht dargestellten, konventionellen Weiterbehandlung zugeführt.

Der in Figur 3 dargestellte Prozess 26 beinhaltet eine biologische Vorbehandlung, die für Reststoffe organischen Ursprungs 28 angewendet wird. Eingesetzt werden vorzugweise anaerobe Prozesse 26, wie beispielsweise eine Vergärung von Biomasse zur Biogasgewinnung oder eine Faulung von Klärschlämmen. Durch anaerobe Prozesse 26 wird organisch gebundener Stickstoff in Ammonium überführt, welches durch die Vergärung nicht abgebaut wird und damit in den Gärresten 30 angereichert ist. Die Gärreste 30 aus der biologischen Vorbehandlung bilden ein Gemisch 20 aus flüssigen und festen Stoffen, die der in Figur 2 beschriebene Fest-/Flüssigtrennung 22 unterzogen werden, bevor die festen Stoffe 10 der Gärreste 30 der Trocknung mit überhitztem Dampf 12 zugeführt werden Figur 4 zeigt als eine mögliche Variante des erfindungsgemäßen Verfahrensschritts 18 zur Abtrennung von flüchtigen Bestandteile 32 aus der Gasphase 14, eine fraktionierte Kondensation, eine sogenannte Rektifikation. Bei diesem thermischen Trennverfahren wird die Tatsache genutzt, dass sich bei einem Verdampfen eines Flüssigkeitsgemisches die Konzentrationen der einzelnen Stoffe im Gas und in der Flüssigphase durch die Temperatur und den Druck festgelegt sind, und sich bei ausreichend langem Kontakt von Gas und Flüssigkeit ein Phasengleichgewicht einstellt. Die Rektifikation kann in einer Kolonne erfolgen, oder durch eine Hintereinanderschaltung mehrerer Verflüssiger.

Die Figur 4 zeigt eine Rektifikationskolonne 34, die einen zylindrischen Behälter 36 mit Einbauten, die einen Wärme- und Stoffaustausch intensivieren, umfasst. Die Einbauten können als Packungen, lose Füllkörperschüttungen oder, wie in der Figur dargestellt, als Böden 38 ausgeführt sein. Die Gasphase 14 wird an der Stelle der Rektifikationskolonne 34 eingeleitet, an der ein der Gasphase 14 entsprechendes Phasengleichgewicht herrscht. Auf dem Boden 38 stehende Flüssigkeit kondensiert aus der Gasphase 14 ein Gemisch mit einer Konzentration an flüchtigen Bestandteilen entsprechend dem herrschenden Phasengleichgewicht. Die dabei frei werdende Kondensationswärme verdampft gleichzeitig ein Gemisch mit einer höheren Konzentration an flüchtigen Bestandteilen 32, welches wiederum durch die Öffnungen des darüber liegenden Bodens 38 in die darauf stehende Flüssigkeit strömt Zum Kopf 40 hin reichern sich die flüchtigen Bestandteile 32 an und können dort abgezogen werden, während die schwerer siedende Komponenten zurückgeführt werden. Im Sumpf 42 reichert sich die schwerer siedende Komponente 44 an und kann dort abgenommen werden.

Bei geeigneter Prozessführung, insbesondere der Einstellung der Druck- und Temperaturverhältnisse in der Rektifikationskolonne 34, kann an jedem Boden 38 diejenige Komponente der zugeführten Gasphase 14 entnommen werden, deren Siedetemperatur derjenigen entspricht, die auf dem entsprechenden Boden 38 herrscht.

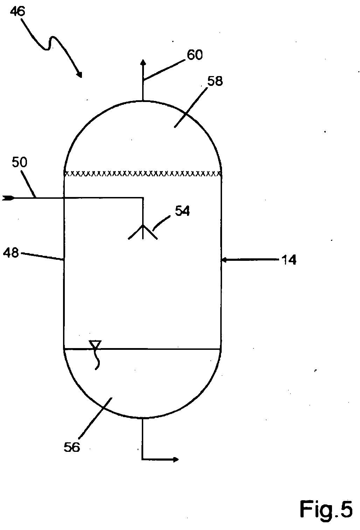

Figur 5 zeigt als eine weitere mögliche Variante des Verfahrensschritts 18 zur Abtrennung von flüchtigen Bestandteilen aus der Gasphase 14. Dargestellt ist ein verfahrenstechnischer Apparat 46 zur Gaswäsche. Er umfasst einen zylinderförmiger Behälter 48. Die Gasphase 14 wird zugegeben und durch in der Figur nicht näher dargestellte Einbauten gleichmäßig im Behälter 48 verteilt. Eine Waschflüssigkeit 50, beispielsweise Schwefelsäure, wird im Gegenstrom zugegeben und durch entsprechende konstruktive Maßnahme, wie zum Beispiel eine Düse 54 fein verteilt. Alternativ kann die Gasphase 14 auch direkt in die Waschflüssigkeit 50 eingeleitet werden. Durch wiederholte Misch- und Trennvorgänge der Gasphase 14 mit der Waschflüssigkeit 50 unter Bildung von Phasengleichgewichten, reagieren die flüchtigen Bestandteile der Gasphase 14 mit der Waschflüssigkeit 50. Das Reaktionsprodukt, beispielsweise Ammoniumsulfat, sammelt sich in einem Sumpf 56 des Behälters 48 und kann dort abgezogen werden. In einem Kopf 58 des Behälters 48 verlässt der gereinigte Gasstrom 60 den Apparat 46.

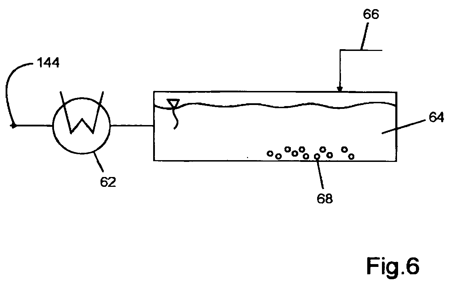

Der erfindungsgemäße Verfahrensschritt 18 ist in Fig. 6 dargestellt und sieht vor, die Gasphase 14 mittels einer geeigneten Vorrichtung 62 zu kondensieren und anschließend die in einer flüssigen Phase 64 gelösten flüchtigen Bestandteile durch Zugabe 66 geeigneter Ionen zu kristallisieren. In einem Ausführungsbeispiel ist der flüchtige Bestandteil Ammoniak, der unter Zugabe 66 von Phosphor und Magnesiumsalzen, zu Magnesium-Ammonium-Phosphat reagiert. Das durch eine chemische Reaktion entstandene Salz kann als Feststoff 68 durch konventionelle mechanische Verfahren von der flüssigen Phase 64 getrennt werden.

Am Ende des erfindungsgemäßen Verfahrens und aller voran beschriebenen Vor- und Nachbehandlungsvarianten liegen trockener Feststoff 16, flüchtige Bestandteile, in gasförmiger, flüssiger oder, als Reaktionsprodukt, in fester Form, sowie destilliertes Wasser, welches aus dem Trocknungsdampf und der Feuchtigkeit des Feststoffs stammt, voneinander getrennt vor.

Grundsätzlich ist das erfindungsgemäße Verfahren geeignet für die Rückgewinnung aller flüchtigen Bestandteile, welche durch überhitzten Dampf in die Gasphase 14 übergehen und die daraus mittels geeigneter thermischer, chemischer oder mechanischer Verfahren abgetrennt werden können.

## Patentansprüche

1. Verfahren zur Rückgewinnung flüchtiger Bestandteile aus einem Feststoff (10), **gekennzeichnet durch** folgende Verfahrensschritte:
- Abtrennen einer flüssigen Phase (24) vor der Trocknung des Feststoffs (10) mit überhitztem Wasserdampf **durch** ein mechanisches Verfahren (22),
- anschließend Trocknung (12) des Feststoffs (10) mittels überhitztem Wasserdampf,
- Abzug von überschüssigem Dampf (14) aus einem geschlossenem Kreislauf
**dadurch** gekennzeichnet, dass
- die Rückgewinnung (18) der flüchtigen Bestandteile aus der Gasphase (14) erfolgt **durch**
- Kondensation des überschüssigen Dampfs (14) und
- Kristallisation der in einer flüssigen Phase (64) gelösten flüchtigen Bestandteile **durch** Zugabe (66) geeigneter Ionen.

2. Verfahren nach Anspruch 1, **dadurch gekennzeichnet, dass** es zur Abtrennung von Ammoniak aus Feststoff (10) organischen Ursprungs verwendet wird.

3. Verfahren nach einem der vorangehenden Ansprüche, **dadurch kennzeichnet, dass** der Feststoff (10) organischen Ursprungs einer biologischen, vorzugsweise anaeroben Vorbehandlung (26) unterzogen wird.

## Claims

1. A method for recovery of volatile ingredients from a solid (10), **characterized by** the following method steps:
- separation of a liquid phase (24) with superheated steam by means of a mechanical process (22) prior to the drying of the solid (10),
- next, drying (12) of the solid (10) by means of superheated steam,
- extracting excess steam (14) from a closed loop,
**characterized in that**
- the recovery (18) of the volatile ingredients from the gas phase (14) is effected by
- condensation of the excess steam (14), and
- crystallization of the volatile ingredients, dissolved in a liquid phase (64), by addition (66) of suitable ions.

2. The method of claim 1, **characterized in that** it is employed for separation of ammonia from a solid (10) of organic origin.

3. The method of one of the foregoing claims, **characterized in that** the solid (10) of organic origin is subjected to a biological, preferably anaerobic pretreatment (26).

## Revendications

1. Procédé de récupération de composants volatils émanant d'un solide (10), **caractérisé par** les étapes suivantes :
- la séparation d'une phase liquide (24) avant le séchage du solide (10) par vapeur d'eau surchauffée au moyen d'un procédé mécanique (22),
- puis le séchage (12) du solide (10) par vapeur d'eau surchauffée,
- l'extraction de la vapeur superflue (14) hors d'un circuit fermé,
**caractérisé en ce que**
- la récupération (18) des composants volatiles de la phase gazeuse (14) est mise en oeuvre par
- condensation de la vapeur superflue (14) et
- cristallisation des composants volatiles dissous dans une phase liquide (64) par ajout (66) d'ions adaptés.

2. Procédé selon la revendication 1, **caractérisé en ce qu'**il est utilisé pour séparer l'ammoniac d'un solide (10) d'origine organique.

3. Procédé selon l'une quelconque des revendications précédentes, **caractérisé en ce que** le solide (10) d'origine organique est soumis à un prétraitement biologique (26), de préférence anaérobique.
